Europäisches Patentamt

European Patent Office

Office européen des brevets

(19)

(11) **EP 0 961 210 A1**

(12) **EUROPEAN PATENT APPLICATION**

(43) Date of publication:
01.12.1999 Bulletin 1999/48

(51) Int. Cl.$^6$: **G06F 17/30**

(21) Application number: 98401312.8

(22) Date of filing: 29.05.1998

(84) Designated Contracting States:
**AT BE CH CY DE DK ES FI FR GB GR IE IT LI LU MC NL PT SE**
Designated Extension States:
**AL LT LV MK RO SI**

(71) Applicant: **XEROX CORPORATION**
**Rochester, New York 14644 (US)**

(72) Inventor: **Chidlovskii, Boris**
**38000 Grenoble (FR)**

(74) Representative:
**Grünecker, Kinkeldey,**
**Stockmair & Schwanhäusser**
**Anwaltssozietät**
**Maximilianstrasse 58**
**80538 München (DE)**

(54) **Signature file based semantic caching of queries**

(57)  A new mechanism for caching Web queries which is based on so-called signature files, with two implementation choices. A first algorithm copes with the relation of semantic containment between a query and the corresponding cache items. A second algorithm extends this processing to more complex cases of semantic intersection.

FIG. 6A

EP 0 961 210 A1

Printed by Xerox (UK) Business Services
2.16.7/3.6

## Description

The present invention relates to online information retrieval systems (e.g. internet/www, intranet), and more particularly to signature file based semantic caching of queries.

In client-server information systems, local client memory is largely used to cache data and to minimise future interaction with the servers. This data caching has a particular importance on the Web where the network traffic and slow servers can lead to long delays in the answer delivery. As standard page-based caching is improper on the Web and tuple-based caching has certain limitations, much effort has been spend to cache user queries and answers for possible future reuse (see Y. Arens and C. A. Knoblock, Intelligent Caching: Selecting, Representing, and Reusing Data in an Information Server, In Proc. *CIKM'94 Conference*, Gaithersburg, Maryland, pp. 433-438, 1994; S. Dar, M. J. Franklin, B. Jonsson, D. Srivastava, M. Tan, Semantic Data Caching and Replacement, In *Proc 22nd VLDB Conference*, Bombay, India, pp. 330-341, 1996; P. Godfrey and J. Gryz, Semantic Query Caching For Heterogeneous Databases,. In *Proc. 4th KRDB Workshop "Intelligent Access to Heterogeneous Information"*, Athens, Greece, pp.6.1-6.6, 1997).

Query caching takes a particular advantage when the user refines a query quite often, for example, by adding or removing a keyword. In this case, many of answer tuples may already be cached and can be delivered to the user right away.

A Web-based query system contacts heterogeneous distributed data repositories, invokes so-called wrappers to convert user queries into the target query language, and controls the data flow from these servers (see Y. Papakonstantinou, H. Garcia-Molina, J. Ullman, MedMaker: A Mediation System Based on Declarative Specifications, in *Proc ICDE'96* Conference, pp.132-141, 1996; and Ch. Reck and B. König-Ries, An Architecture for Transparent Access to Semantically Heterogeneous Information Sources, In *Proc. Cooperative Information Agents*, Lect. Note Comp. Science, Vol. 1202, 1997). As data are usually transferred over the network in HTML format, the wrappers also extract answer tuples from the retrieved HTML files before the final answer is reported to the user (and stored in the cache).

A typical Web query is a conjunction of terms. Each term in the query is a keyword, possibly negated with the operator NOT, and applied to one or more attributes (title, author, etc.). In most Web servers, the operator NOT is equivalent to AND NOT to force a query to contain at least one non-negated term.

Semantic caching.

Semantic caching manages the client cache as a collection of semantic regions; access information is managed and cache replacement is performed at the unit of semantic regions (see Dar *et al.*). Semantic regions group together semantically related documents covered, for example, by a user query.

In any solution to semantic caching, each semantic region has a constraint formula which describes its contents, a counter of tuples in the contents, a pointer to the set of actual tuples in the cache, and the additional information that is used by the replacement policy to rank the regions. Like a query, any region formula is a conjunction of terms.

When a query is posed at a client, it is split into two disjoint pieces : (1) the portion of the answer available in the local cache, and (2) a remainder query, which retrieves any missing tuples in the answer from the server. If the remainder query is not null (i.e., the query covers parts of the information space that are not cached), the remainder query is sent to the server and processed there (see U. M. Borghoff, R. Pareschi, F. Arcelli, F. Formato, Constraint-Based Protocols for Distributed Problem Solving, In *Science of Computer Programming*, vol. 30, 201-225, 1998).

Although a number of important principles of query caching are discussed in the abovementioned Dar *et al.*, Godfrey *et al.* and Arens and Knoblock articles, none provides any efficient method for the query evaluation against the cache items. Moreover, the query evaluation is reduced in the abovementioned Godfrey et al article to a Datalog query evaluation, which may be computationally hard.

The present invention provides a method carried out in an information processing system, the systems comprising a processor, memory, and a user interface, a predetermined plurality of locations in said memory defining a cache, said cache comprising one or more semantic regions, comprising: (a) receiving a query $Q$ input by a user via the user interface, the query having a corresponding query signature $S_Q$; (b) in dependence upon said query signature $S_Q$, returning as an answer corresponding to said query $Q$ (i) the contents of one or more of said regions, or (ii) the contents of one or more of said regions together with an remainder answer obtained from a sewer in response to a query remainder derived from said query $Q$.

The invention further provides a programmable information processing system when suitably programmed for carrying out the method of any of the preceding claims, the system including a processor, and a memory, and a user interface, the processor being coupled to the memory, user interface, and being operable in conjunction therewith for executing instructions corresponding to the steps of said method(s).

The invention provides a new mechanism for caching Web queries. It is based on so-called signature files and allows for efficient query evaluation, which is linear in the number of cache items. According to embodiments of the invention, each semantic region in the cache is associated with a signature. For a user • query, the signature is created in a similar way and verified against the region signatures stored in the cache. The proposed caching mechanism includes a procedure that identifies all cache items qualified for the query, i.e., it detects which cache items can be re-used immediately, and which missing information has to be requested from the servers.

This mechanism has three main advantages. First, it processes both critical cases in the same elegant way, 1) when a query is contained in the cache, or 2) when it intersects some regions. As a result, the proposed mechanism avoids most cases of tuple duplications, and has a moderate storage requirement. Second, it supports efficient reporting of partial answers and generating of query remainders. Finally, it provides a simple solution for the region coalescing and the replacement policy.

Embodiments of the invention will now be described, by way of example, with reference to the accompanying drawings, in which:

Figure 1 schematically illustrates a network of machines suitable as a basis for implementing the invention;

Figure 2 shows (a) Region signature construction, and (b) Sample queries and their signatures;

Figure 3 depicts a suitable cache architecture;

Figure 4 illustrates semantic containment cases — (a) Single region containment; (b) multiple region containment; (c) single query containment; and (d) multiple query containment;

Figure 5 depicts region coalescing examples — (a) Query $Q = d$ is issued, (b) Regions coalesced after the query, (c) Query $b \wedge d \wedge f$ is issued, and (d) Regions updated after the query;

Figures 6(a) to 6(c) illustrate the processing steps for implementing caching according to a first technique;

Figure 7 shows a semantic intersection example;

Figures 8(a) to 8(d) illustrate the processing steps for implementing caching according to a second technique; and

Figure 9 illustrates region coalescing for the semantic intersection — (a) Query $c \wedge d$ is issued, and (b) after the query.

## 1. Hardware and infrastructure

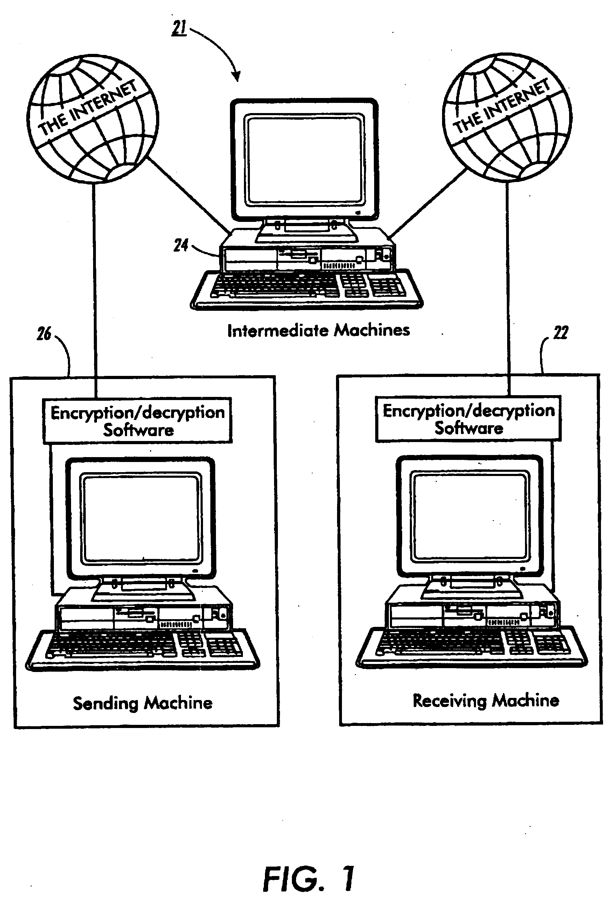

It will be appreciated that the present invention may be implemented using conventional computer network technology, either by means of an intranet or, more suitably, a internet. The invention may implemented using conventional WWW web browser software (e.g. Netscape) providing cross-platform communication and document transfer over the internet. This is schematically illustrated in Fig. 1. It will be appreciated that each machine 22, 24, 26 forming part of the network 21 may be a PC running Windows™, a Mac running MacOS, or a minicomputer running UNIX, which are well known in the art. For example, the PC hardware configuration is discussed in detail in *The Art of Electronics*, 2nd Edn, Ch. 10, P. Horowitz and W. Hill, Cambridge University Press, 1989. However, it will be appreciated that the invention may be implemented using different system configurations:, for example, EP-A-772,857 and EP-A-_____ (corresponding to US application S.N. 08/668,704).

Upon request of a user at machine 22 a document or other information (e.g. answer to query) stored on machine 26 may be retrieved and sent from machine 26 over the internet, via any number of intermediate machine 24 to machine 22. As is well known, the document may be retrieved using as a unique identifier its World Wide Web URL, obtained, for example using a suitable query input to a search engine.

## 2.1 Signature files and cache architecture

Signature files were originally designed for the retrieval of full-text fragments containing query words (see C. Faloutsos, Signature files: Design and Performance Comparison of Some Signature Extraction Methods, In *Proc. SIGMOD'85 Conference*, pp. 63-82, 1985; and C. Faloutsos and S. Christodoulakis, Signature Files: An Access Method for Documents and Its Analytical Performance Evaluation, In *ACM Trans*. of *Information Systems*, Vol. 2, n. 4, pp. 267-288, 1984). With the superimposed coding which is the most widely known, each semantic region is associated with a formula in the conjunctive form. Each term in region formula is assigned with a term signature which is a binary sequence of ones and zeros. The region signature is generated by superimposing (bit-wise OR-ing) all term signatures generated from the region formula.

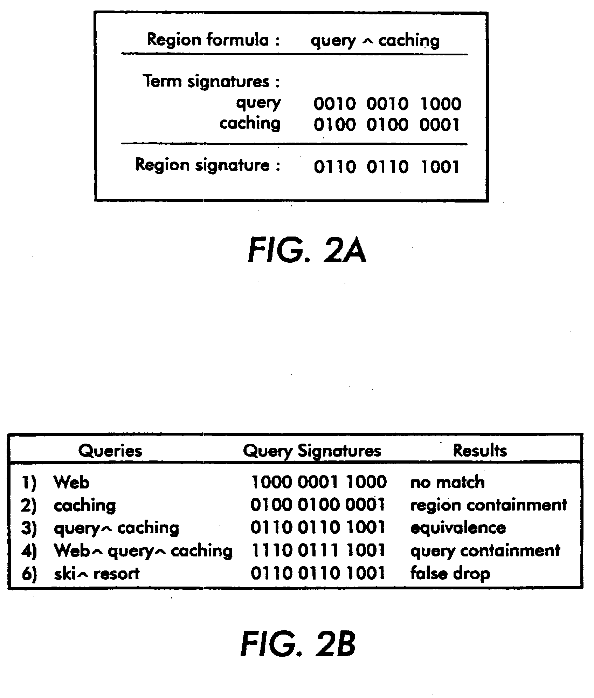

Figure 2 shows (a) Region signature construction, and (b) Sample queries and their signatures.

Figure 2(a) shows the signature generation for the semantic region "query $\wedge$ caching". For a user query, which is also a conjunction, all terms are assigned with signatures and superimposed into a query signature in the way similar to cache regions. Then, the query signature is matched against each region signature in the signature file to provide a partial answer and construct the query remainder.

Two different caching techniques set out herein work with different semantic relations between semantic regions and the query. The first caching technique copes with semantic containment between the query and a region, when one of them contains other. The second caching technique described in Section 4 extends the processing to more frequent and complex cases of semantic intersection, when neither region contains the query nor vice versa.

We begin with the semantic containment which consists of three cases. Query Q is equivalent to a region $R$ if their formulas are equivalent. A region $R$ contains query $Q$ if the query formula can be obtained from the region formula by dropping one or more terms. In this case, the answer to the query is a proper subset of the region contents. Inversely, semantic region $R$ is contained in query $Q$ if the region formula can be obtained from the query by dropping one or more query terms. Also, the region containment means that the answer is a superset of the region contents. In any of the three cases described above, the region $R$ is qualified for query $Q$.

Let $S_Q$ and $S_R$ denote the query signature and a region signature, respectively. With the bit-wise comparison of the signatures, the semantic containment is detected as follows:

**Region containment**, $S_Q \subseteq S_R$: for each bit in the query signature set to one, the corresponding bit in the region signature is also set to one (query 2 in Figure 2(b)).

**Equivalence**, $S_Q = S_R$ : the region and query signatures have the same bits set to one (query 3 in Figure 2(b)).

**Query containment**, $S_Q \supseteq S_R$: for each bit in the region signature set to one, the corresponding bit in the query signature is also set to one (query 4 in Figure 2(b)).

A signature file eliminates most, but not all of the regions which are not qualified for the query. The last query in Figure 2(b) is a false drop. False drops are semantic regions which the signatures are qualified for the query, but they don't. Indeed, if terms "ski" and "resort" are assigned with signatures "0110 0000 1000" and "0000 0110 0001", respectively, then the signature of query "ski $\land$ resort" is "0110 0110 1001", and, therefore, equivalent to the signature of the region "query $\land$ caching".

False drops are eliminated by further comparing the query with the regions, but if they are numerous, the performance degrades. To minimise the false drop probability, the expected number of zeros and ones in a signature must be the same (Faloutsos and Christodoulakis). Then, for the same number of distinct keywords in a region or query formula, when the length of the signatures increases, the density of ones in the signatures decreases, and the chance of getting false drops will decrease correspondingly. However, it will increase the storage overhead. If the signature length is $F$ bits and $t$ is the maximal number of terms in the query, the optimal number $k_{opt}$ of bits set to one in a term signature (according to the uniform probability distribution) is

$$k_{opt} = (F \cdot \ln 2)/t \tag{1}$$

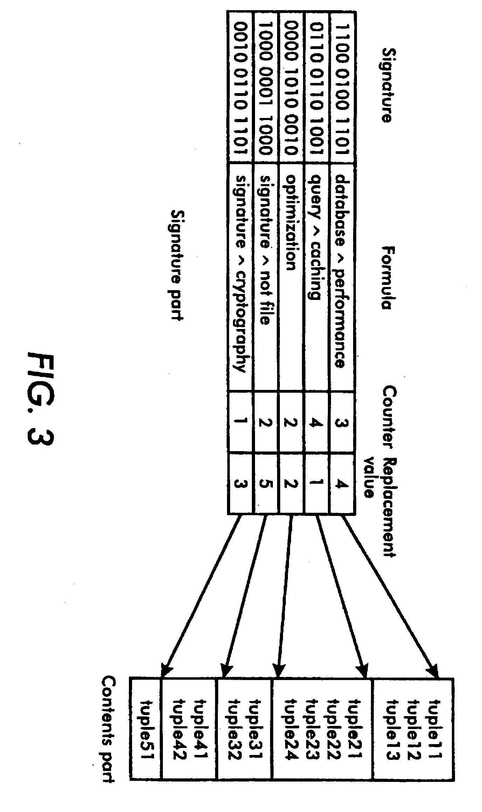

**Cache organisation**. To process a query faster, the cache architecture according to embodiments of the present invention maintains region signatures separately from region contents (see Figure 3). Besides a signature, each entry (region) in the signature part contains the region formula, the counter of tuples, the link to the corresponding region contents and the value of the replacement function. Qualified regions are detected in the signature part. Once a semantic region is qualified for a full or partial answer, tuples stored in the region contents and matching the query are reported to the user.

**Negation**. Any region formula contains keywords as well as their negations. To provide a smooth processing for queries with negations, signatures for a keyword and its negation can be related. A negated term can be assigned with a signature which is a bit-wise negation of the basic term signature. However, as the number $k$ of bits set to one in a term signature is much less then the signature length $F$, this would result in $F-k$ bits set to one in the negated term signature. Therefore, this solution would increase considerably the false drop probability for any region which formula contains the negated term. To avoid this problem to happen, a keyword and its negation (and assign their signatures) are treated as two independent terms, with $k$ bits set to one in any signature.

## 3. Simple caching technique

The first technique processes three cases of the semantic containment, namely, (1) equivalence, (2) query containment, and (3) region containment. If the query is equivalent to a region in the cache, the query answer coincides with the region contents. If a region contains the query, the complete answer can be also produced from the region contents, with the query formula used as a filter. Moreover, if two or more regions contain the query, any of them can produce the answer. To reduce the filtering overhead, the algorithm selects and filters the region whose contents has the least number of tuples. In the case of region containment, the algorithm extracts a partial answer from the region contents and generates the query remainder which is sent to the server, If several regions are contained in the query, any or all of them can produce the partial answer. As the number of such regions can be large, the algorithm selects top $m$ regions with the maximal number of tuples.

If no semantic containment is detected, the cache is not used and the query is sent to the server. When the answer is received, a new cache region corresponding to the query is created. If the cache has no free space for the region, it must discard one or several regions from the cache, which are the least valuable for future reuse. As the basic replacement strategy, we use the LRU ("least recently used") strategy. The strategy is appropriate for the Web, where the search is coupled with the navigation and discovery, and a new query often is a refinement of the previous query.

With the algorithm framework described above, three important issues require further analysis, namely, the construction of region remainders, region coalescing and cache region replacement.

### 3.1 Constructing query remainders

Assume that m semantic regions, $R_1, ..., R_m$, are contained in the query. Although the query remainder $Q_r$ can be constructed as $Q_r = Q - R_1 ... - R_m = Q \wedge\neg R_1 \wedge ... \wedge\neg R_m$, such a constraint formula, after simplification, can contain disjunctions and may not be allowed for a server which accepts conjunctive queries only. For example, for query a and the region $a \wedge b \wedge c$ (characters from the beginning of the alphabet are used to denote keywords), the constraint formula $a - a \wedge b \wedge c$ results in the following disjunction formula:

$$a - a \wedge b \wedge c = a \wedge\neg (a \wedge b \wedge c) = a \wedge\neg b \vee a \wedge\neg c.$$

To distinguish the regions which drive the query remainder to a conjunctive form from those which do not, it is necessary to introduce the difference measure between the query and region formulas. The difference is defined as the number of terms in the region formula not presented in the query. This definition splits the set of regions $R_1, ..., R_m$ into groups, where all regions in a group have $l$ terms of difference from the query, $l = 1, 2 ....$ In the above example, the region formula $a \wedge b \wedge c$ has a two-term difference from query a. Note, the case $l=0$ is also possible, it appears when the query and region are equivalent or the region contains the query, and, therefore, the query remainder is null.

The difference measure helps us to establish that the regions with one-term difference preserve the conjunctive form of the query remainder, the following holds: **Result 1** (*Remainder Construction*) *Assume the cache contains m regions which the formulas have one-term differences, say $a_1, a_2, .... a_m$, from query formula Q. Then, the query remainder $Q_r$ is $Q \wedge\neg a_1 \wedge\neg a_2 \wedge ... \wedge\neg a_m$.*

### 3.2 Region coalescing

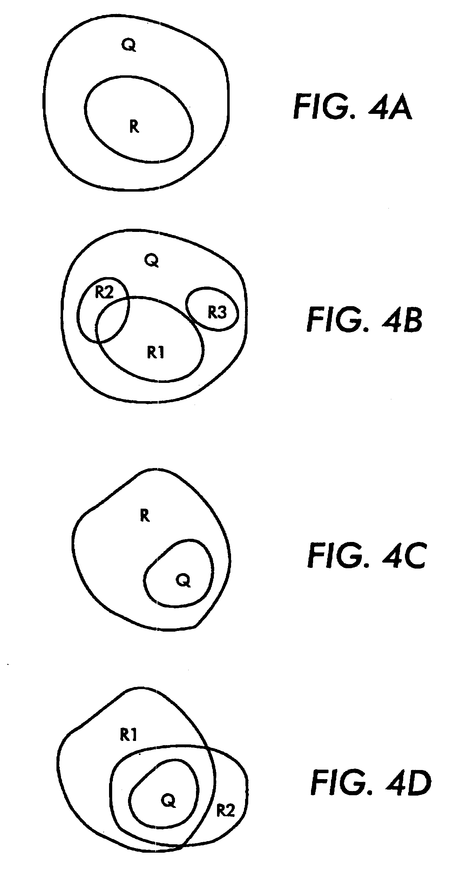

Figure 4 illustrates semantic containment cases — (a) Single region containment; (b) multiple region containment; (c) single query containment; and (d) multiple query containment.

In the cases of query containment and equivalence, the query remainder is null. Consequently, the query is processed locally and cache contents is kept unchanged. The region providing the query answer updates the corresponding replacement value (see Section 3.3).

In the region containment case, the query remainder is not null, and, moreover, it is a complement to a semantic region $R$ (see Figure 4(a)). When the answer to the query remainder $Q_r$ is received, there are two modes to add the answer to the cache. With the no-coalescing strategy, a new cache region is created for the query remainder. With the coalescing strategy, no new region is added; instead, region $R's$ contents is extended with the answer to the remainder and the region formula $R$ is substituted (relaxed) with $Q$. Both above solutions occupy the same cache space to store tuples, but the coalescing strategy is preferable as it uses only one region instead of two regions with the no-coalescing strategy.

If $m$ semantic regions, $R_1, ..., R_m$, yield the region containment (see Figure 4(b)), the advantage of the coalescing strategy is even larger. The query remainder $Q_r = Q - R_1 - ... - R_m$ is complement to the union of the regions and the coalescing strategy will keep one region only (with formula $Q$), instead of regions $R_1, ..., R_m$ and the query remainder. As regions $R_1, ..., R_m$ can contain tuple duplications, the coalescing strategy provides better storage utilisation in both signature and contents parts of the cache.

### 3.3 Replacement strategy

As the cache size is limited, the cache may discard the least recently used regions to free space for a new region. The standard LRU strategy, designed for replacement of pages of tuples in the cache, is referring to the same size, and one page or tuple is the replacement unit which can match query or not.

In the query caching, the situation is different. If region $R$ is qualified for the query, involvement of the region in the answer may be different, If the query contains the region (Figure 4(a)), the region contents is completely involved in responding as all tuples from the region contents appears in the answer. By contrast, if the region contains the query (see Figure 4(c)), the region involvement is partial as only some of the region tuples match the query.

Therefore, the replacement function should take into account the region involvement in the query answer. If the region involvement is complete, the new replacement value for the region is "the most recent one", as in the case when the query answer is shipped from the server. If the region involvement is partial, and there are tuples in the region contents not matching the query, the change of the replacement value toward "the most recent one" depends on how large the portion of the matched tuples is. The region involvement can be measured as $p = T_R/T$, where $T_R$ is the number of tuples appeared in the query answer and T is the total number of tuples in R's contents.

Without loss of generality, it is assumed that "the most recent value", $V_{top}$, is increasing by one each time a new query is issued. If the current replacement value of region $R$ is $V_R$, $V_R < V_{top}$, and the region involvement is $p$, we calculate a new replacement function as $V_R' = V_R + (V_{top} - V_R) \cdot p$. If $p=1$, then $V_R = V_{top}$. If $p=1/2$, then $V_R' = (V_{top} + V_R)/2$. Note, this replacement function can be implemented to any region in the cache, qualified for the query and not. If a region is not qualified for the query and therefore, its involvement $p$ is zero, the region replacement value does not change.

**Example 1**.

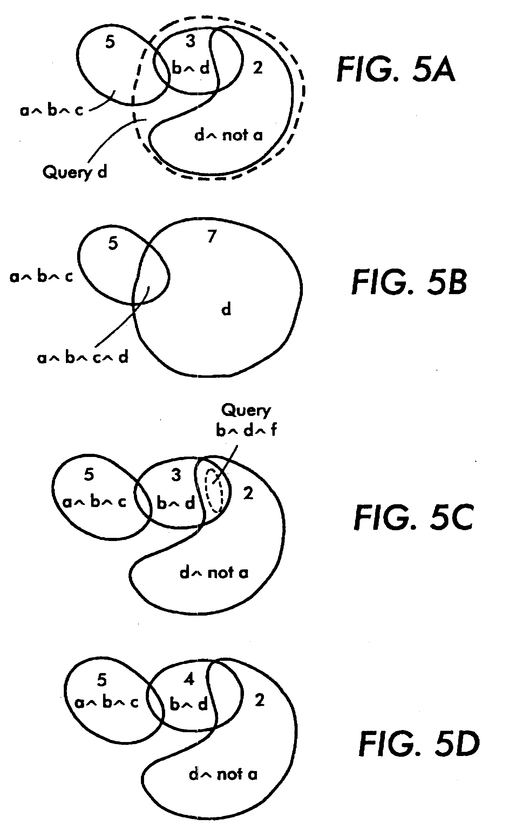

Figure 5 depicts region coalescing examples — (a) Query $Q=d$ is issued, (b) Regions coalesced after the query, (c) Query $b \wedge d \wedge f$ is issued, and (d) Regions updated after the query.

The cache contains three regions with $a \wedge b \wedge c$, $b \wedge d$ and $d \wedge \neg a$. Figure 5(a) shows the regions with their replacement values (assuming $V_{top}=6$). Assume a new query is $d$. The second and third regions yield the query containment. As both region formulas differ from the query formula in one word only ($b$ for the second region and $\neg a$ for the third one), the query remainder generated will be $d \wedge a \wedge \neg b$. Once the complete answer is produced, the second and third regions and the query reminder are substituted with one region with formula $d$ (Figure 4.b). Its replacement value is $V_{top}=7$.

Assume now that the query is $b \wedge d \wedge f$ (see Figure 5(c)). Two regions, $b \wedge d$ and $d \wedge \neg a$, contain the query. The former is selected to answer to the query as it has less tuples in the contents. Its replacement value is updated (from 3 to 4) accordingly to the portion of tuples matching the query in the region contents.

**Caching algorithm (1).**

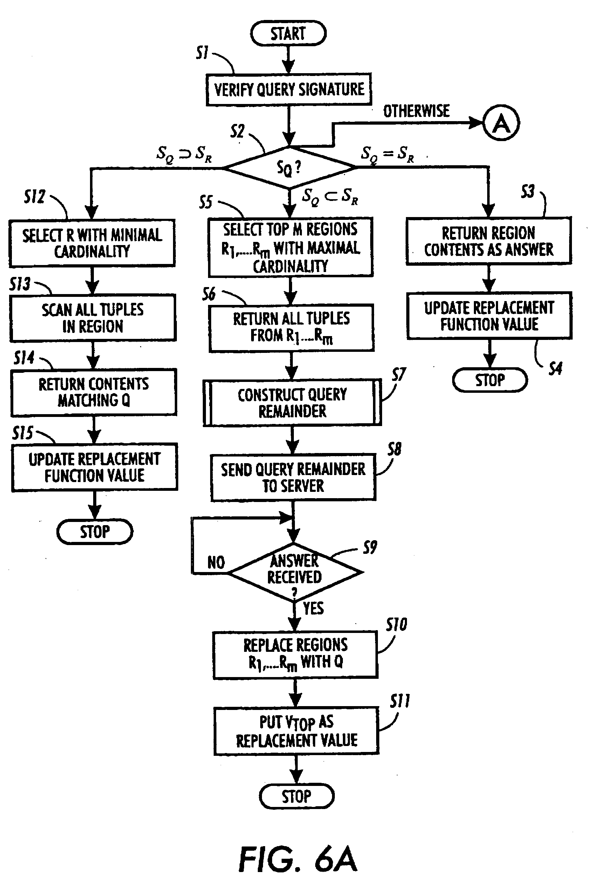

Figures 6(a) to 6(c) illustrate the processing steps for implementing caching according to a first technique. *Input:* cache with semantic regions and query $Q$. *Output:* answer to $Q$ and the cache updated.

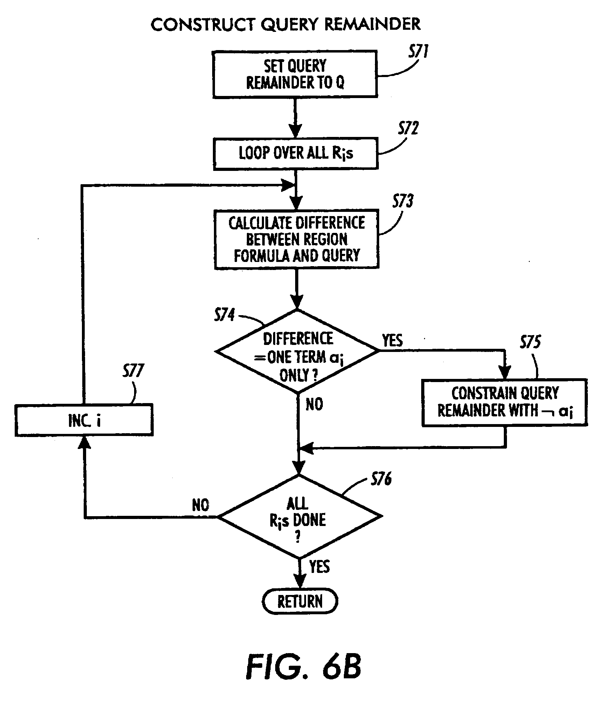

1. Verify the query signature against all region signatures in the cache (step s1, s2).
2. $S_Q = S_R$: If there is a region whose formula is equivalent to the query, return the region contents as the query answer. Update the replacement function value of the region and stop (steps s3 and s4).
3. $S_Q \supset S_R$: If one or more regions contain the query, choose the region with the minimal cardinality. Scan tuples in the region contents and return ones matching the query. Update the replacement function value of the region and stop (steps s12 to s15).
4. $S_Q \subset S_{Ri}$: If several regions are contained in the query, choose top $m$ regions, $R_1, ..., R_m$, with the maximal cardinality. Return all tuples from the regions contents of $R_1, ..., R_m$, discarding duplications (steps s5 to s11). Construct the query remainder as follows (steps s71 to s77; Fig. 6(b)):

- Set the query remainder to query Q (step s71).
- For each region $R_i$ providing the region containment, calculate (step s73) the difference between the region formula and the query. If the difference is one term $a_i$ only, constrain the query remainder with $\neg a_i$.

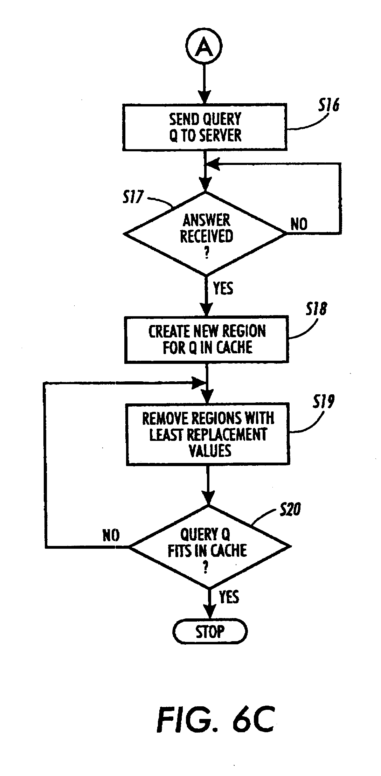

Send the query reminder to the server. When the answer is received, replace regions $R_1, ..., R_m$ with one region $Q$. Put $V_{top}$ as the replacement value for Q and stop. 5. Otherwise (steps s16 to s20; Fig. 6(c)), send query $Q$ to the server. Once the answer is received, create a new region for $Q$ in the cache. To free space for the region, remove the regions with the least replacement values, till query $Q$ fits the cache.

**4. Advanced caching technique**

The caching technique described in the previous section efficiently manages the semantic containment cases. However, it does not manage more frequent but more complex cases of the semantic intersection, when a semantic region can produce a portion of the answer, but it neither contains nor is contained in the query.

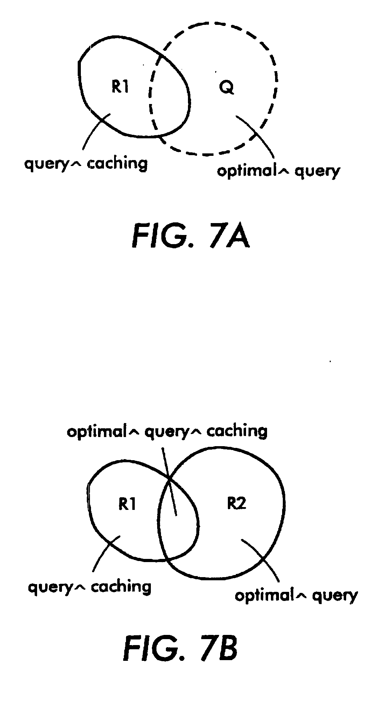

Figure 7 shows a semantic intersection example.

**Example 2**. Assume, the cache contains region $R_1$ with formula "$\wedge$ query" and query Q is "optimal $\wedge$ query" (see Figure 7(a)). Since there is no containment, Algorithm 1 does not exploit $R_1$ for the partial answer, although the tuples in the region contents matching the formula "optimal $\wedge$ query $\wedge$ caching" match also the query. Moreover, when Algorithm 1 receives the answer to query $Q$ from the server, it creates a new semantic region $R_2$ with the same formula "optimal ∧ query" (see Figure 7(b)). Two semantic regions $R_1$ and $R_2$ contain tuple duplicates, which match their intersection formula "optimal∧ query ∧ caching". In other words, in the semantic intersection cases, Algorithm 1 retains a low cache use and a high tuple duplication level.

In this section an advanced caching technique is described which, besides the containment cases, processes the semantic intersection to improve the cache utilisation and reduce the tuple duplications.

Intersection of a semantic region $R$ and query $Q$ is given by intersection of their formula intersection $R \cap Q$. Given the region signature $S_R$ and the query signature $S_Q$, we use their signature intersection $S_Q \cap S_R$, which is obtained by the bit-wise AND-ing of $S_Q$ and $S_R$. Then, for a signature S, the signature cardinality $|S|$ denotes the number of bits set to one in the signature.

In the semantic intersection of a semantic region $R$ and query $Q$, we distinguish two main cases:

**Complement**: $Q \cap R = \emptyset$; the formula intersection is null. For instance, query $a \wedge b$ is a complement to the region $a \wedge \neg b$. Consequently, the region contains no tuples to answer to the query. However, in the complement case, the region coalescing is possible. For the query and region above, the coalescing would result in one region with formula a.

**Intersection**: The $Q \cap R \neq \emptyset$; the formula intersection is not null. There are two following sub-cases:

- Query and region formulas have some common terms appearing in the intersection (for example, region "caching ∧ query" and query "optimal ∧ query" have term "query" in common).
- Query and region formulas have no common words. For instance, region a and query b have no common terms, but their intersection $a \wedge b$ is not empty, and, therefore, the region can contribute to the partial answer.

**Semantic intersection in signature files**. If the query $Q$ and a region $R$ have some common terms, their signatures have bits set to one which correspond to signatures of the common terms. The more terms formulas $Q$ and $R$ have in common, the larger the number of bits jointly set to one, and the semantic intersection of $Q$ and $R$ can be measured by the number $|S_Q \cap S_R|$ of corresponding bits set to one in both signatures. However, this is not always true. For example, for region with formula $a$ and query $b$, their signature intersection can have no bits set to one, but the region can report to the user the tuples matching the formula $b \wedge a$.

In the remainder of the section, we show how the signature file method allows to quickly detect which regions intersected by the query can contribute to the partial answer and constrain the query remainder. Note that the following discussion about the semantic intersection assumes that no equivalence or query containment is detected in the cache, and, therefore, the query remainder is not null.

Like in the semantic containment, not all of the regions having intersections with the query can contribute to the query remainder, since conjunctive queries are only allowed. To detect which regions can contribute, term differences introduced in Section 3 are again used. Moreover, the Remainder Construction, which was derived for the semantic containment, but can be fully applied to the semantic intersection, is used. That is, if the cache contains m regions which the formulas are not contained in the query $Q$, but have one-term differences, say $a_1, a_2, ..., a_m$, the query remainder $Q_r$ can be constructed as $Q \wedge \neg a_1 \wedge \neg a_2 \wedge ... \wedge \neg a_m$.

**Example 2 (continued).** As region "caching∧ A query" has one-term difference from the query "optimal ∧ query", the region can report the portion "optimal∧ query ∧ caching" to the user and construct the query reminder "optimal ∧ query ∧¬ caching". Similarly, the region a has one-term difference from query b. the portion $a \wedge b$ is reported and the query remainder is $b \wedge \neg a$.

This eminent feature of semantic regions with one-term difference from the query in constraining the query remainder results in a double-scan evaluation of the query against the cache contents. The first, fast scan over the region signatures identifies all regions with one-term difference in order to quickly construct the query remainder and produce the first partial answer. The second, slow scan checks if other intersection cases can enrich the partial answer. The two scans over the region signatures differ in the filtering function applied to the region signatures.

Each region $R$ filtered during the first scan should have at most one-term difference from the query. Therefore, if the region signature has $|S_R|$ bits set to one, and its intersection with the query signature has $|S_R \cap S_Q|$ such bits, the difference between the two numbers should be at most $k$ bits, where $k$ is the number of bits set to one in a term signature. The following result states this fact explicitly.

**Result 2** *If region R has one-term difference from query Q, then*

$$|S_R \cap S_Q| \geq |S_R| - k \tag{2}$$

The first scan verifies the condition (2) on the region signatures. If the condition holds for a region signature, the region formula is checked for one-term difference. Like in the semantic containment, a false drop happens if condition (2) holds, but the region formula does not provide one-term difference. A number of experiments have been conducted and it has been found that the number of false drops when verifying the condition (2) can be kept small by the appropriate choice of signature file parameters, calculated with the formula (1).

The second scan detects regions which formulas have two and more terms of difference and can not constrain the query remainder. By analogy with one-term difference, a region $R$ which formula has $l$, $l \geq 2$ terms of difference from the query, satisfies the condition

$$|S_R \cap S_Q| \geq |S_R| - k \cdot l \qquad (3)$$

However, this condition can not be used in the full extent for the second scan. First, the condition (3) loses its importance for increasing values of $k$. In fact, a typical Web query or region formula has an average of three or four terms, and the condition (3) is often reduced to a simple $|S_R \cap S_Q| \geq 0$, which would sweep all the region signatures, resulting in the large number of false drops and a high filtering overhead. Second, regions having two or more terms of difference from the query, usually contributes much less to the answer that regions with one-term difference. Third, the tuples they contribute will anyway be duplicated in the answer to query remainder, as their formulas were not excluded from the remainder.

These arguments are taken into consideration and only two conditions for the second scan considered:

- $|S_R \cap S_Q| \geq |S_R| - 2k$: this condition fetches mainly the regions with two-term difference from the query. Therefore, some regions having more terms of the difference will not be fetched.
- $|S_R \cap S_Q| \geq 0$: all region formulas satisfy this condition; therefore, it yields numerous false drops. However, it retrieves all tuples in the cache matching the query.

In most cases, the first option is preferable as it provides a good tradeoff between the number of false drops and the number of tuples retrieved. The second option can be used if the cache is small or the application is keen to retrieve all tuples from the cache matching the query.

**Region coalescing and region replacement**. The semantic intersection gives a new extension to the coalescing strategy. The strategy can coalesce the query and a region if only their unified formula is a conjunction. For instance, it can coalesce query $a \wedge b$ and the region $a \wedge \neg b$ in one region. Such operation can be done if only three following conditions hold : 1) the region has one term difference, say $a_1$, from the query; 2) symmetrically, the query has one term difference, say $a_2$, from the region; 3) $a_1$ is a negation of $a_2$. Obviously, such a situation can be detected by the same condition (2) and processed afterwards.

The replacement policy, as it was designed for the semantic containment, remains the same for the semantic intersection. When a new query is issued, any semantic region in the cache has its replacement value updated, toward to $V_{top}$, proportionally to the region involvement in the answer.

**Second caching technique**. The second caching technique disclosed here covers both relations between the query and semantic regions, that is, the semantic containment discussed in Section 3, and the semantic intersection discussed in this section. Moreover, the technique does not distinguish between regions providing the query containment and semantic intersection and process them uniformly to identify those with one-term difference.

## Caching algorithm 2.

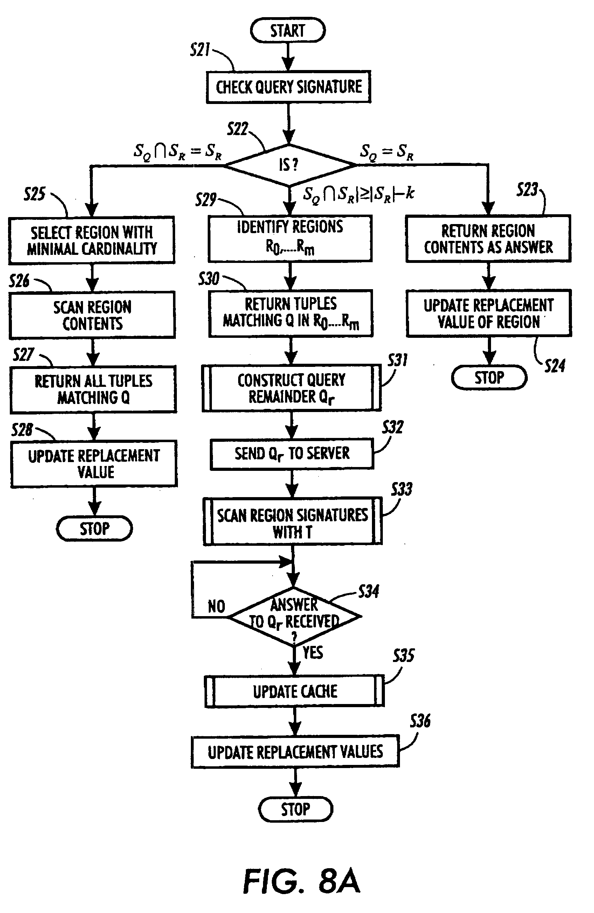

Figures 8(a) to 8(d) illustrate the processing steps for implementing caching according to a second technique. *Input*: cache with semantic regions and query $Q$. *Output*: answer to $Q$ and the cache updated.

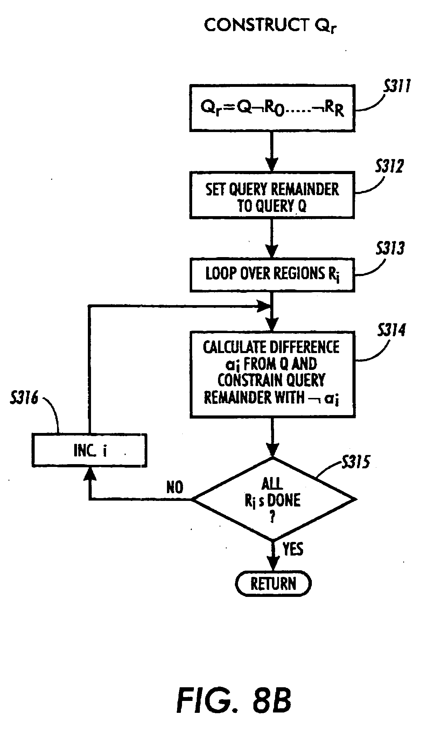

1. (First scan) Check the query signature against the region signatures in the cache (step s21).
2. $S_Q = S_R$; if there is a region whose formula is equivalent to the query, return the region contents as the answer. Update the replacement value of the region (s23, s24) and stop.
3. $S_Q \cap S_R = S_R$: if one or more regions contain the query, choose the region with the minimal cardinality. Scan the region contents and return the tuples matching the query. Update the replacement value of the region and stop. (Steps s25 to s28).
4. $|S_Q \cap S_R| \geq |S_R| \geq -k$: Identify all regions, say $R_0, ..., R_m$, $m \geq 0$, with one-term difference from the query. Return the tuples matching the query in the semantic regions of $R_0, .., R_m$, discarding duplications (steps s29 to s36). Construct the query reminder $Q_r = Q \neg R_0 ... \neg R_k$ as follows (steps s311 to 315; Fig. 8(b)):

- Set the query remainder to query $Q$ (step s312).
- For each region $R_i$, $i = 0, .., m$, calculate (step s314) the difference $a_i$ from the query and constrain the query remainder with $\neg a_i$.

Send the query remainder to the server.

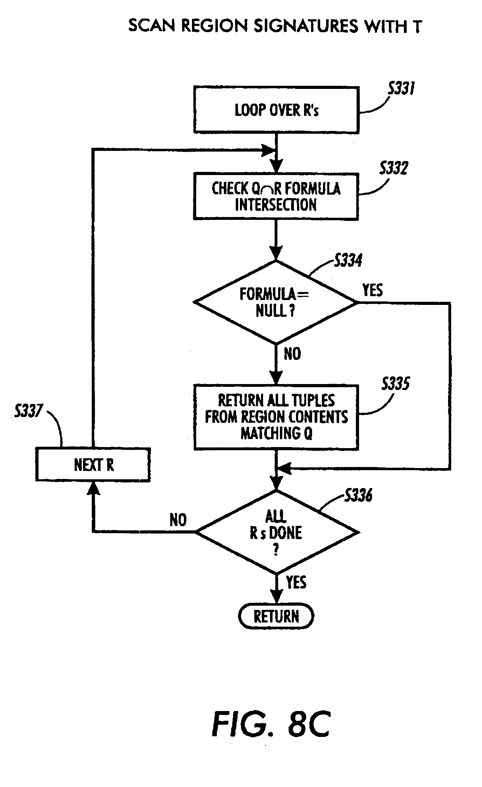

5. (Second scan) Scan the region signatures with the condition $T$ (steps s331 to s336; Fig. 8(c)), where $T$ is a choice between $|S_R| - 2k \leq |S_R \cap S_Q| < |S_R| - k$ and $0 \leq |S_R \cap S_Q| < |S_R| - k$. For each region $R$ fetched, check the $Q \cap R$ formula intersection (step s332). If the formula is not null, report (step s335) the tuples from the region contents matching the query.

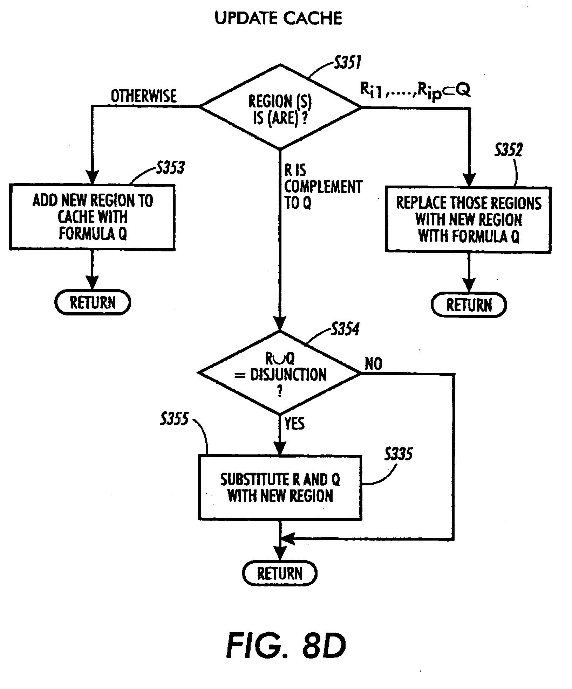

6. When the answer to the query remainder $Q_r$ is received (step s34), update the cache as follows (steps s351 to s355; Fig. 8(d)).

- If regions $R_{i1}$, ..., $R_{ip}$ contain the query, replace them with a new region with formula $Q$.
- If a region $R$ is complement to query $Q$ and formula $R \cup Q$ is a disjunction, substitute $R$ and $Q$ with a new region.
- Otherwise, add a new region to the cache with the formula $Q_r$.

Update the replacement values for all regions contributed to the partial answer.

Example 3.

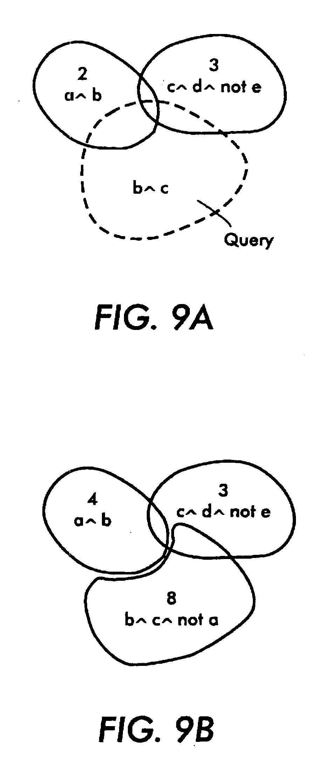

Figure 9 illustrates region coalescing for the semantic intersection — (a) Query $c \wedge d$ is issued, and (b) after the query.

Assume the cache contains the regions with formulas $a \wedge b$, $c \wedge d \wedge \neg e$ and the user query is $b \wedge c$; Figure 9(a) shows the regions with their replacement values (assuming $V_{top}=7$) and the query. The first scan detects that the region $a \wedge b$ has one-term difference from the query and can constrain the query remainder $Q_r$ which is $b \wedge c \wedge \neg a$. All tuples from the region contents matching the query give the partial answer. The second scan detects the semantic intersection for region $c \wedge d \wedge \neg e$. The region contents is scanned and tuples matching the query complete the partial answer.

Once the answer to the query remainder $Q_r$ is received, a new region with the formula $c \wedge d \wedge \neg e$ is created with the replacement value equal $V_{top} =8$. Also, both $a \wedge b$ and $c \wedge d \wedge \neg e$ have their replacement values updated, proportionally to their contribution to the answer (see Figure 9(b)).

**Implementation**

There is presented hereinbefore a new mechanism for caching Web conjunctive queries, which is designed for use in the system disclosed in J.-M. Andreoli, U. Borghoff, R. Pareschi. Constraint-Based Knowledge Brokers. In *Proc. 1st Intl. Symp.* on Parallel Symbolic *Computation* (PASCO'94), Lecture Notes Series in Computing 5, pp 1-11. The mechanism is based on signature files and allows for an efficient reuse of past queries. Two caching algorithms cope with the relations of semantic containment and intersection between a user query and the semantic regions.

**Claims**

1. A method carried out in an information processing system, the systems comprising a processor, memory, and a user interface, a predetermined plurality of locations in said memory defining a cache, said cache comprising one or more semantic regions, comprising:

   (a) receiving a query $Q$ input by a user via the user interface, the query having a corresponding query signature $S_Q$;
   (b) in dependence upon said query signature $S_Q$, returning as an answer corresponding to said query $Q$

       (i) the contents of one or more of said regions, or
       (ii) the contents of one or more of said regions together with an remainder answer obtained from a server in response to a query remainder derived from said query $Q$.

2. The method of claim 1, wherein the or each semantic regions have corresponding region signatures $S_R$ in the cache, and step (b) comprises determining whether $S_Q = S_R$, $S_Q \supset S_R$, $S_Q \subset S_{Ri}$ or none of these, and preferably wherein,

   if $S_Q = S_R$, indicating that a region exists whose formula is equivalent to the query $Q$, step (b) comprises (b1) returning the contents of said region as the answer to said query,
   if $S_Q \supset S_R$, indicating that one or more regions contain the query $Q$, step (b) comprises (b1') scanning tuples in the region contents and returning those tuples matching the query, and

if $S_Q \subset S_{Ri}$, indicating that several regions are contained in the query $Q$, step (b) comprises (b1") using the top $m$ regions, $R_1 ..., R_m$, with the maximal cardinality, returning all tuples from the regions contents of $R_1, ..., R_m$, discarding duplications.

3. The method of claim 3 or 4, wherein step (b) further comprises, after returning said answer, updating a replacement function value of the regions(s).

4. The method of claim 3 or 4, wherein step (b) further comprises:

   (b2") constructing a query remainder from said query;
   (b3") sending the query remainder to a server;
   (b4") upon receiving an answer from said server corresponding to said query remainder, replacing regions $R_1$, ..., $Rm$ with query $Q$; and
   (b5") setting the most recent value $V_{top}$ as the replacement function value for $Q$.

5. The method of claim 5, wherein step (b2") comprises:

   (b2"i) selling the query remainder to $Q$;
   (b2"ii) for each region $R_i$ providing the region containment,
   (b2"ii1) calculating the difference between the formula for the region and the query Q, and
   (b2"ii2) if the difference is one term $a_i$ only, constraining the query remainder with $\neg a_i$.

6. The method of claim 1, wherein the or each semantic regions have corresponding region signatures $S_R$ in the cache, and step (b) comprises determining whether $S_Q = S_R$, $S_Q \cap S_R = S_R$, $|S_Q \cap S_R| \geq S_R - k$, or none of these, and preferably wherein,

   if $S_Q = S_R$, indicating that a region exists whose formula is equivalent to the query $Q$, step (b) comprises (b1) returning the contents of said region as the answer to said query,
   if $S_Q \cap S_R = S_R$, indicating that one or more regions contain the query $Q$, step (b) comprises (b1') scanning tuples in the region contents and returning those tuples matching the query, and
   if $|S_Q \cap S_R| \geq S_R - k$, step (b) comprises (b1") identifying all regions, $R_0, ..., R_m$, m≥0, with one term difference from the query, and returning all tuples from the regions contents of $R_0, ..., R_m$, discarding duplications.

7. The method of claim 6, wherein step (b) further comprises:

   (b1"i) constructing a query remainder $Q_r = Q \neg R_0 ... \neg R_k$ from said query;
   (b1"ii) sending the query remainder to a server.

8. The method of claim 7, wherein step (b1"i) comprises:

   (b1"i1) setting the query remainder to query Q, and
   (for each region $R_i$, $l=0,...,m$, calculating the difference $a_i$ from the query and constraining the query remainder with $\neg a_i$.

9. The method of any of claims 6 to 8, further comprising (c) scanning the region signatures with the condition $T$, where $T$ is a choice between $|S_R| - 2k \leq |S_R \cap S_Q| < |S_R| - k$ and $0 \leq |S_R \cap S_Q| < |S_R| - k$, and preferably wherein step (c) comprises, for each region $R$ fetched, checking the $Q \cap R$ formula intersection and, if the formula is not null, returning the tuples from the region contents matching the query.

10. The method of any of claims 6 to 9, further comprising (d) upon receiving the answer to the query remainder $Q_n$ updating the cache, and preferably wherein said step of updating the cache comprises

    (d1) if regions $R_{i1}, ..., R_{ip}$ contain the query, replace them with a new region with formula $Q$,
    (d2) if a region $R$ is complement to query $Q$ and formula $R \cup Q$ is a disjunction, substitute $R$ and $Q$ with a new region, and
    (d3) otherwise, add a new region to the cache with the formula $Q_r$, and updating the replacement values for all regions contributed to the partial answer.

11. A programmable information processing system when suitably programmed for carrying out the method of any of the preceding claims, the system including a processor, and a memory, and a user interface, the processor being coupled to the memory, user interface, and being operable in conjunction therewith for executing instructions corresponding to the steps of said method(s).

*21*

THE INTERNET

THE INTERNET

*24*

**Intermediate Machines**

*26*

| Encryption/decryption Software |
|---|

**Sending Machine**

*22*

| Encryption/decryption Software |
|---|

**Receiving Machine**

*FIG. 1*

| Region formula : | query ∧ caching |
|---|---|
| Term signatures : | |
| query | 0010 0010 1000 |
| caching | 0100 0100 0001 |
| Region signature : | 0110 0110 1001 |

## FIG. 2A

| | Queries | Query Signatures | Results |
|---|---|---|---|
| 1) | Web | 1000 0001 1000 | no match |
| 2) | caching | 0100 0100 0001 | region containment |
| 3) | query∧ caching | 0110 0110 1001 | equivalence |
| 4) | Web∧ query∧ caching | 1110 0111 1001 | query containment |
| 6) | ski∧ resort | 0110 0110 1001 | false drop |

## FIG. 2B

EP 0 961 210 A1

| Signature | Formula | Counter | Replacement value |
|---|---|---|---|
| 1100 0100 1101 | database ∧ performance | 3 | 4 |
| 0110 0110 1001 | query ∧ caching | 4 | 1 |
| 0000 1010 0010 | optimization | 2 | 2 |
| 1000 0001 1000 | signature ∧ not file | 2 | 5 |
| 0010 0110 1101 | signature ∧ cryptography | 1 | 3 |

Signature part

| |
|---|
| tuple11 <br> tuple12 <br> tuple13 |
| tuple21 <br> tuple22 <br> tuple23 <br> tuple24 |
| tuple31 <br> tuple32 |
| tuple41 <br> tuple42 |
| tuple51 |

Contents part

*FIG. 3*

FIG. 4A

FIG. 4B

FIG. 4C

FIG. 4D

FIG. 5A

FIG. 5B

FIG. 5C

FIG. 5D

FIG. 6A

CONSTRUCT QUERY REMAINDER

FIG. 6B

FIG. 6C

query ∧ caching
optimal ∧ query

## FIG. 7A

optimal ∧ query ∧ caching

query ∧ caching
optimal ∧ query

## FIG. 7B

START

S21 — CHECK QUERY SIGNATURE

S22 — IS ?

$S_Q \cap S_R = S_R$

$S_Q = S_R$

$|S_Q \cap S_R| \geq |S_R| - k$

S25 — SELECT REGION WITH MINIMAL CARDINALITY

S26 — SCAN REGION CONTENTS

S27 — RETURN ALL TUPLES MATCHING Q

S28 — UPDATE REPLACEMENT VALUE

STOP

S29 — IDENTIFY REGIONS $R_0, \ldots R_m$

S30 — RETURN TUPLES MATCHING Q IN $R_0 \ldots R_m$

S31 — CONSTRUCT QUERY REMAINDER $Q_r$

S32 — SEND $Q_r$ TO SERVER

S33 — SCAN REGION SIGNATURES WITH T

S34 — ANSWER TO $Q_r$ RECEIVED ?

NO

YES

S35 — UPDATE CACHE

S36 — UPDATE REPLACEMENT VALUES

STOP

S23 — RETURN REGION CONTENTS AS ANSWER

UPDATE REPLACEMENT VALUE OF REGION

STOP — S24

## FIG. 8A

CONSTRUCT $Q_r$

FIG. 8B

SCAN REGION SIGNATURES WITH T

LOOP OVER R's — S331

CHECK Q∩R FORMULA INTERSECTION — S332

S334 — FORMULA= NULL ?

YES

NO

S335 — RETURN ALL TUPLES FROM REGION CONTENTS MATCHING Q

S337 — NEXT R

S336 — ALL R s DONE ?

NO

YES

RETURN

FIG. 8C

23

UPDATE CACHE

FIG. 8D

**FIG. 9A**

**FIG. 9B**

**European Patent Office**

## EUROPEAN SEARCH REPORT

Application Number

EP 98 40 1312

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | TAVAKOLI N ET AL: "A new signature approach for retrieval of documents from free-text databases" INFORMATION PROCESSING & MANAGEMENT, 1992, UK, vol. 28, no. 2, pages 153-163, XP002085207 ISSN 0306-4573 * the whole document * | 1,11 | G06F17/30 |

TECHNICAL FIELDS SEARCHED (Int.Cl.6)

G06F

The present search report has been drawn up for all claims

| Place of search | Date of completion of the search | Examiner |
|---|---|---|
| THE HAGUE | 20 November 1998 | Katerbau, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)